# EUROPÄISCHE PATENTSCHRIFT

(11) **EP 0 652 426 B1**
(45) Veröffentlichungstag und Bekanntmachung des Hinweises auf die Patenterteilung: **08.07.1998**
(21) Anmeldenummer: 93810773.7
(22) Anmeldetag: 09.11.1993
(51) Int. Cl.: G01M 15/00, F02B 77/08

(54) **Verfahren und Vorrichtung zum Erkennen von Störungen im Betrieb von Dieselmotoren**
Method and apparatus for recognising disturbances during the operation of a diesel engine
Méthode et appareil pour reconnaître des perturbations dans le functionnement d'un moteur à diesel

(43) Veröffentlichungstag der Anmeldung: 10.05.1995
(73) Patentinhaber: Wärtsilä NSD Schweiz AG, 8401 Winterthur (CH)
(72) Erfinder: Svimbersky, Karl, CH-8404 Winterthur (CH); Barrow, Samuel, CH-8405 Winterthur (CH); Blanc, Manfred, CH-8404 Winterthur (CH); Hug, Christoph, CH-8542 Wiesendangen (CH)
(74) Vertreter: Hammer, Bruno, Dr.

(56) Entgegenhaltungen:
- EP-A- 0 463 953
- DE-A- 2 716 712

## Beschreibung

Die Erfindung bezieht sich auf ein Verfahren zum Erkennen von Störungen im Betrieb von Dieselmotoren nach dem Oberbegriff von Anspruch 1.

Störungen im Betrieb von Dieselmotoren führen zu Leistungsverlusten, aber auch zu Schäden an Zylinder und Kolben. Dies kann so weit führen, dass beispielsweise bei einem Schiff, das sich auf Fahrt auf hoher See befindet, ein einzelner Zylinder stillgelegt werden muss, um die Fahrt mit verminderter Motorleistung fortsetzen zu können, oder, was noch schwerwiegender ist, dass das Schiff abgeschleppt werden muss.

Dem Eintreten von Fressverschleiss-Schäden an Kolben und Zylinder wird bisher auf vielfache Weise vorgebeugt. Es besteht die Möglichkeit, mehr Schmiermittel zuzuführen als für den Normalbetrieb eigentlich notwendig wäre. Schmiermittelkosten sind aber bei den Betriebskosten z.B. eines Schiffsmotors ein bedeutender Kostenfaktor. Eine andere Möglichkeit, das Risiko von Fressverschleiss, sog. Kolbenringfressern niedrig zu halten, ist das Leistungspotential des Motors nicht voll zu nutzen. Diese vorbeugenden Massnahmen sind in keiner Weise befriedigend. Vorerst einmal sind sie sehr kostenaufwendig. Zum anderen geben sie keinerlei Garantie dafür, dass Kolbenringfresser, sog. Scuffing ausbleibt, sondern es kann lediglich die Häufigkeit des Eintretens solcher Schäden bedeutend verringert werden.

Zudem ist im Zeitpunkt, wo sich Scuffing für das Bedienungspersonal wahrnehmbar bemerkbar macht, in der Regel der sich allmählich einstellende Schaden an Zylinderwand und/oder Kolben, bzw. Kolbenring schon zu weit fortgeschritten, als dass eine aufwendige Reparatur vermieden werden kann.

Aufgabe der Erfindung ist es, ein Verfahren zu schaffen, das es erlaubt, sog. Kolben-, bzw. Kolbenringfresser, kurz Scuffing, schon zu einem frühen Zeitpunkt zuverlässig zu erkennen, möglicherweise schon zu einem Zeitpunkt, wo sich noch kein Schaden an Koben, Kolbenring und/oder Zylinder eingestellt hat.

Diese Aufgabe wird mit einem Verfahren gelöst, das die Merkmale im Kennzeichen des unabhängigen Anspruchs 1 aufweist. Die abhängigen Ansprüche beziehen sich auf vorteilhafte Weiterentwicklungen des Verfahrens. Ein Dieselmotor nach der Erfindung wird nach dem Verfahren von einem der Verfahrensansprüche betrieben und ein Schiff nach der Erfindung ist mit einem derartigen Dieselmotor angetrieben, bzw. weist einen nach dem Verfahren betriebenen Motor auf.

Mit dem Überwachen der Temperatur der Zylinderwand, bzw. des Temperaturverlaufs verfügt man über ein Mittel zum Früherkennen sich ankündigender Störungen im Betrieb eines Dieselmotorzylinders, lange bevor sich eine Beschädigung von Motorteilen einstellt, die eine Reparatur notwendig machen würden.

EP 0 463 953 beschreibt eine Vorrichtung zum Erkennen des Überhitzens eines Motors mit einem Sensor der am Zylinderkopf oder in dessen Nähe angebracht ist. Wenn die Temperaturänderungsrate einen vorgegebenen Wert erreicht oder übersteigt, wird ein Alarm ausgelöst und die Drehzahl des Motors verändert, wenn Temperatur und Drehzahl des Motors in einem bestimmten, vorgegebenen Bereich sind. Der Zündpunkt von Motoren wird in Abhängigkeit von der Temperatur des verändert.

DE 27 16 712 beschreibt eine Kolbenmaschine bei der in der Innenwand der Zylinderlaufbuchse eine Fühlervorrichtung z.B. zum Messen der Temperatur, eingebaut ist. Mit der Temperaturmessung wird der Schmierungszustand zwischen Lauffläche und Kolbenringen überwacht.

Dem Verfahren nach der Erfindung liegt die Erkenntnis zugrunde, dass über den Umfang eines Kolbenrings betrachtet, die schadhafte Stelle relativ eng begrenzt ist. Die Kolbenringe - und mit ihnen die schadhaften Stellen - wandern mit einer bestimmten Geschwindigkeit über den Umfang des Zylinders.

Das sich ankündige Scuffing, Ringscuffing bzw. Fressverschleiss macht sich durch erhöhte Reibung zwischen Kolbenring und Zylinderwand bemerkbar, was sich u.a. unmittelbar durch Temperaturerhöhung im Bereich der schadhaften, d.h. erhöht reibenden, Stelle ausdrückt.

Die Temperaturmessung an bzw. in der Zylinderwand wird mit Vorteil zwischen den oberen Umkehrpunkten des ersten und zweiten Kolbenrings gemacht. Mit dem Verfahren nach der Erfindung gelingt es nun, die Temperaturänderungen, die auf ein sich einstellendes oder schon in Ansätzen vorhandenes Scuffing hinweisen, von den normalen, im Motor an der Messstelle auftretenden Temperaturänderungen zu unterscheiden, also Fressverschleiss/Scuffing im Frühstadium zu erkennen. Im Frühstadium treten auch noch keine Schäden an Kolben, Kolbenringen, Zylinderwand oder Lagern ein.

Mit dem automatischen Erkennen des Scuffing im Frühstadium wird zudem die Möglichkeit geboten, sofort Gegenmassnahmen im Betrieb des Motors zu treffen, bzw. einzuleiten. Beispielsweise kann die Leistung des ganzen Motors oder nur des von Scuffing befallenen Zylinders des Motors erniedrigt werden oder ein durch Scuffing bedrohter Zylinder, bzw. ein Motor mit einem solchen Zylinder kann abgestellt werden. Die Zufuhr von Schmieröl kann erhöht werden usw.. Natürlich ist es auch möglich, zwei oder mehrere Massnahmen nebeneinander einzuleiten.

Dadurch, dass nach dem neuen Verfahren jeder Zylinder laufend überwacht wird, ist es auch möglich, das Verschwinden von sich ankündigendem Scuffing, d.h. den Erfolg der eingeleiteten Gegenmassnahmen, festzustellen. Dies ermöglicht es beispielsweise, wieder auf die volle Betriebsleistung zurückzukehren. Alle dies Vorgänge können durch das Bedienungspersonal erfolgen, das sich anhand der laufenden Messungen und Anzeigen orientiert. Es ist aber auch denkbar, dass die Vorgänge automatisch über Steuer- und/oder Regelanlagen erfolgen.

Eine derartige neue Überwachung von Scuffing erlaubt es aber auch, den Motor bei bedeutend verminderter Gefahr eines Motorschadens näher an seiner oberen Leistungsgrenze zu betreiben. Sehr vorteilhaft ist die Erfindung auch beim Einfahren und bei Abnahmeversuchen mit Dieselmotoren, also bei Betriebsarten, wo die Gefahr für Scuffing erhöht ist, da der Motor noch neu und Zylinder und Kolben, bzw. Kolbenringe noch nicht vollständig aufeinander angepasst sind und/oder der Motor in Extrembereichen betrieben wird.

Das Verfahren zum frühzeitigen Erkennen von Kolben- und/oder Zylinderstörungen, insbesondere von Scuffing bzw. Fressverschleiss bei Dieselmotoren, ist insbesondere für langsam- und mittelschnell laufende Gross-Dieselmotoren, die bei Tourenzahlen von weniger als 100 bis etwa 300 U/min arbeiten, gut geeignet. Das laufende und/oder zyklische Messen der Temperatur der Zylinderwand mit einem Temperatursensor an wenigstens einer Stelle im oberen Bereich des Kolbens und das Erkennen des für die Störung charakteristischen Temperaturverlaufs, bzw. das Erkennen der vom charakteristischen Temperaturverlauf abgeleiteten, charakteristischen Grössen für Fressverschleiss/Scuffing/Koblbenringfresser gestatten das Früherkennen der sich ankündigenden Störung lange vor bevor Schäden am Motor sich einstellen. Gegenmassnahmen, wie Reduzieren der Leistung und/oder Erhöhen der Schmiermittelzufuhr, können sofort manuell oder automatisch eingeleitet werden. Umgekehrt können diese Massnahmen wieder rückgängig gemacht und auf Normalbetrieb zurückgeschaltet werden, wenn die charakteristischen Grössen, bzw. Stör-Anzeigesignale wieder verschwunden sind.

Die Ausführungsformen des erfinderischen Verfahrens werden anhand von nachstehen Beispielen von schematischen Zeichnungen und Diagramme näher erläutert.

Es zeigen:
- Fig. 1: das Blockschema einer Anordnung für einen Zylinder eines Dieselmotors, welche diesen Zylinder auf Ring-Scuffing überwachen und mit Steuer- und Regelkreisen für das Ändern der Leistung/Brennstoffzufuhr und der Schmiermittelzufuhr zu diesem Zylinder;
- Fig. 2: den typischen zeitlichen Temperaturverlauf für die acht Zylinder eines normal arbeitenden Dieselmotors, bei welchem keiner der Zylinder Anzeichen von Scuffing zeigt;
- Fig. 3: den zeitlichen Temperaturverlauf für die vier Zylinder eines Dieselmotors, bei welchem drei Zylinder normal arbeiten und einer der Zylinder typische Anzeichen von Scuffing/Ringscuffing zeigt.

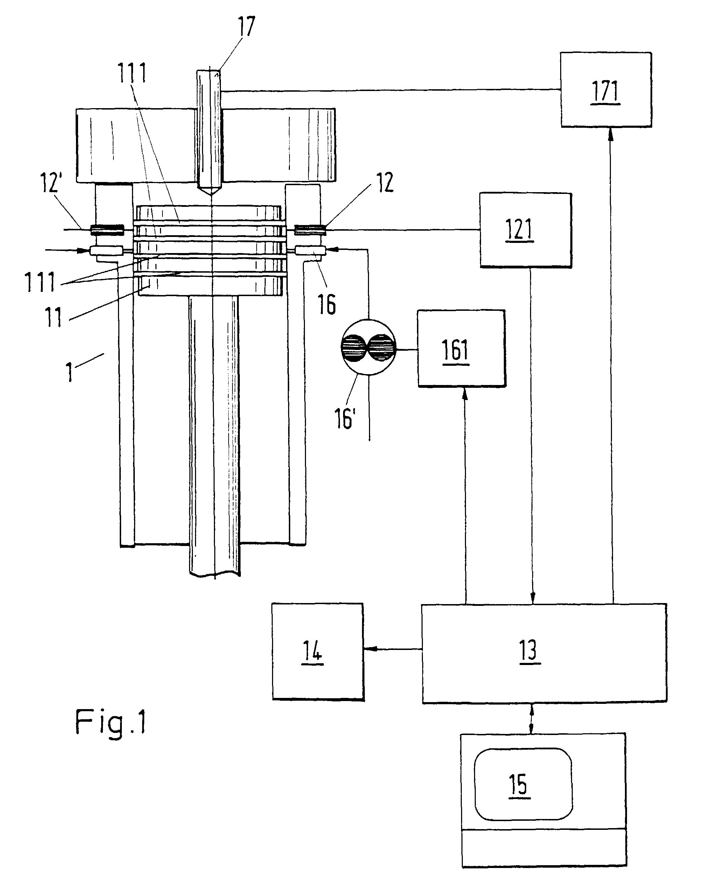

Fig. 1 zeigt den Zylinder 1, in welchem sich der Kolben 11 mit den Kolbenringen 111 bewegt. Im Bereich zwischen den Umkehrpunkten des von oben ersten und zweiten der Kolbenringe 111 sind die Temperatursensoren 12, 12' angeordnet. Die Temperaturwerte werden beispielsweise alle 10 Sekunden von der Messelektronik 121 gemessen, vorverstärkt und normiert und dann an die Auswerte-Elektronik 13 übertragen. Die Temperaturwerte des Temperatursensors 12' oder weiterer Temperatursensoren können in gleicher Weise aufbereitet und an die Auswerte-Elektronik weitergegeben werden. Wenn die Auswerte-Elektronik 13 beim Prüfen der gemessenen Temperaturwerte den für Scuffing, bzw. Kolbenringfresser typischen Temperaturverlauf bzw. die typischen Temperaturwerte feststellt, kann darauf auf verschiedenste Art reagiert werden. Beispielsweise kann eine optische und/oder akustische Alarmmeldung im Alarmmelder 14 und/oder auf dem Display ausgelöst werden. Diese Alarmmeldung veranlasst, dass das Bedienungspersonal Massnahmen, wie Reduzieren der Leistung, Erhöhen der Schmiermittelzufuhr usw. treffen kann. Die Auswerte-Elektronik 13 kann aber auch mit Steuer- und Regelkreisen erweitert sein, mit denen die zu treffenden Massnahmen automatisch eingeleitet werden. In diesem Fall wird also z.B. die Schmierregelung 161 angesprochen, welche die Schmiermittelpumpe 16' auf erhöhte Förderleistung schaltet. Dem von Scuffing bedrohten Zylinder 1 wird über die Schmiermitteldüse 16 zusätzliches Schmiermittel zugeführt. Es kann aber auch die Lastregulierung 171 angesteuert werden, so dass z.B. die Brennstoffzufuhr über die Einspritzung 17, 171 reduziert wird.

Die Auswerte-Elektronik 13, beispielsweise ein programmierbarer Rechner, überwacht natürlich laufend und weiterhin die vom Sensor 12 gemessenen Temperaturwerte bzw. die von der Sensorelektronik 121 übertragenen Temperatursignale.

Sobald die für Ring-Scuffing/Fressverschleiss/Kobenringfresser typischen Signale verschwunden sind, kann beispielsweise die Schmiermittelzufuhr wieder reduziert und/oder die Leistung des Zylinders wieder erhöht werden.

Verschwinden die Scuffingsignale nicht, kann der Zylinder 1 allein oder gar der ganze Motor abgestellt werden.

Wie wird nun Scuffing/Fressverschleiss/Kolbenringfresser überhaupt erkannt. Es hat sich gezeigt, dass Scuffing anhand bestimmter Eigenschaften des Temperaturverlaufs zuverlässig bestimmt werden kann.

In einem Beispiel der einen Ausführungsform des Verfahrens nach der Erfindung wird beispielsweise alle 10 Sekunden an einer bestimmten Stelle des Zylinderwand mit einem Sensor 12 die Temperatur bestimmt. Gleichzeitig wird die Änderung der Temperatur von einer Messung zur anderen bestimmt. Anhand dieser Werte, die laufend über ein zurückliegendes Zeitfenster von beispielsweise 20 Minuten auf Anzeichen von Scuffing analysiert, bzw. überwacht wird, erfolgt die Ueberwachung auf früh erkennbare sich ankündigende Schäden. Ein typisches Scuffingmerkmal wird daran erkannt, dass in Kombination:
a. BEGINN DER SCUFFING: Die Temperaturänderung · +1°C pro 10 sec (pro Messintervall) beträgt, mit der Einschränkung, dass ein Unterbruch des Temperaturanstiegs während höchstens einem Messzyklus zugelassen ist (1 x 0°C innerhalb von 10 sec).
   Mit andern Worten: Ein Temperaturanstieg von · +1°C sollte wenigstens bei jedem zweiten Messzyklus gemessen werden.
b. Der Gradient der Temperaturänderung über das Scuffingereignis ist wenigstens +1°C/10 sec.
und
c. der Temperaturanstieg ist grösser oder gleich 4°C.
d. ENDE DES SCUFFINGEREIGNISSES:
   Temperaturänderung µ 0°C während mehr als einem Messzyklus (10 sec).

Dieser Vorgang wird als einzelnes Scuffingereignis identifiziert.

Dies ist aber nicht ausreichend für das Auslösen von Scuffingalarm.

### ALARMBEDINGUNG:

Scuffingalarm soll nun aber nur ausgelöst werden, wenn in einem zurückliegenden Zeit-, bzw. Beobachtungsfenster von 1200 sec (20 Minuten) vier oder mehr Scuffingereignisse auftreten.

Basierend auf praktischen Erfahrungen wird also zweckmässigerweise erst das mehrfache Auftreten der Scuffingereignisse für den Zylinder als alarmierend betrachtet.

In einer anderen Ausführungsform wird der zeitliche Temperaturverlauf frequenzgefiltert, beispielsweise mit einem Bandpassfilter von 1/300 Hz bis 1/60 Hz. Auch bei dieser Ausführungsform wird die Kontrolle laufend rückwärts über ein Zeitintervall von z.B. 20 Minuten durchgeführt. Dann wird das gefilterte Signal vom Frequenzbereich quadriert und integriert, d.h. die Varianz der gefilterten Messergebnisse gebildet. Dies geschieht laufend über die zurückliegenden z.B. 20 Minuten. Wenn die Varianz einen bestimmten Scuffing-Alarmwert erreicht oder überschreitet, wird der Alarm ausgelöst.

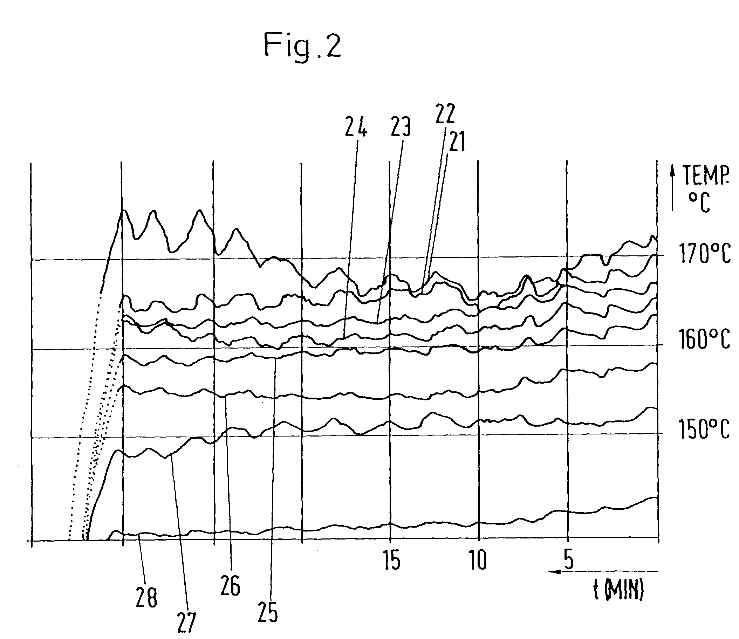

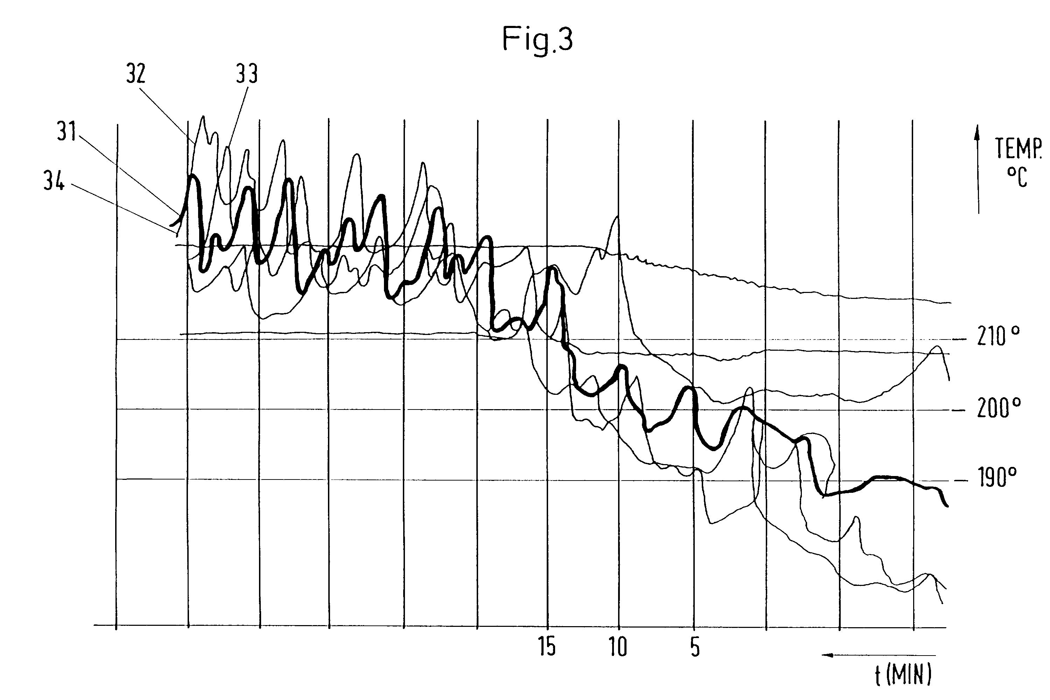

Fig. 2 zeigt die Kurven 21 bis 28 des typischen zeitlichen Temperaturverlaufs an je einer Messstelle in der Zylinderwand jedes Zylinders eines Dieselmotors mit acht Zylindern. Die Zeitachse verläuft bei dieser Figur, wie auch bei Fig. 3 in umgekehrter Richtung, also von rechts nach links und nicht wie gewohnt von links nach rechts. Die Drehzahl des Motors ist 100 U/min. Der Abstand zwischen je zwei Marken auf der Abszisse entspricht 5 Minuten. Die Beobachtungsdauer entspricht also etwa 30 Minuten. Keiner der Zylinder zeigt Anzeichen von Scuffing.

Ganz anders verhält es sich bei Fig. 3. Dort sind die Kurven 31 bis 34 des zeitlichen Temperaturverlaufs an je einer Messstelle in der Zylinderwand jedes Zylinders eines Dieselmotors mit vier Zylindern gezeigt. Die Drehzahl des Motors ist 100 U/min. Der Abstand zwischen je zwei Marken auf der Abszisse entspricht 5 Minuten. Die Beobachtungsdauer entspricht also etwa 55 Minuten. Der Verlauf der Kurve 31 des einen Zylinders zeigt einen für Scuffing typischen Verlauf. Die anderen Zylinder zeigen keine Anzeichen von Scuffing.

## Patentansprüche

1. Verfahren zum Erkennen von Kolben- und/oder Zylinderstörungen, insbesondere von Scuffing bzw. Fressverschleiss bei einem langsam- und mittelschnell laufenden Gross-Dieselmotor, wobei
die Temperatur der Zylinderwand, an wenigstens einer Stelle im oberen Bereich des Kolbens, laufend und/oder zyklisch gemessen wird und
das Erkennen der Störung durch das Erkennen des für die Störung charakteristischen Temperaturverlaufs, bzw. durch das Erkennen von vom charakteristischen Temperaturverlauf abgeleiteten, charakteristischen Grössen erfolgt
gekennzeichnet durch
das Bestimmen der Temperaturänderung über ein Zeitintervall;
das Bestimmen von Temperaturänderungen, sowie das Erkennen des Erreichens eines vorgegebenen, positiven Temperaturgradienten in einem ersten Zeitintervall;
durch das Bestimmen der Temperaturänderung, sowie das Erkennen des Erreichens einer vorgegebenen positiven Temperaturdifferenz in einem zweiten Zeitintervall; und
durch das Bestimmen der Häufigkeit des positiven vorgegebenen Temperaturgradienten, in Verbindung mit der vorgegebenen positiven Temperaturdifferenz über das zweite Zeitintervall in einem dritten Zeitintervall, wobei mit dem Erreichen oder Überschreiten einer vorgegebenen Häufigkeit in diesem dritten Zeitintervall, die Störung erkannt wird.

2. Verfahren nach Anspruch 1, bei welchem
der vorgegebene Temperaturgradient wenigstens 1°C pro mehrere Sekunden ist;
die Temperaturdifferenz mehrere °C erreicht und
der vorgegebene Temperaturgradient in Verbindung mit der vorgegebenen Temperaturdifferenz innerhalb einer gegebenen Anzahl Minuten in einer für den Motor und die Sensoranordnung charakteristischen, vorgegebenen Häufigkeit beobachtet wird.

3. Verfahren nach Anspruch 2, bei welchem
der Temperaturgradient grösser oder gleich 1°C pro 20 Sekunden ist;
die Temperaturdifferenz grösser gleich 4°C erreicht und
dieser Temperaturgradient in Verbindung mit der Temperaturdifferenz innerhalb von 20 Minuten mindestens 4 mal beobachtet wird.

4. Verfahren nach Anspruch 1, bei welchem
laufend oder zyklisch im ersten Zeitintervallen die Temperatur gemessen wird;
die Varianz der Temperaturänderungen vorzugsweise in einem Frequenzband bestimmt wird, welches Frequenzen des Temperaturverlaufs umfasst, die für die zu erkennende Störung charakteristisch sind,
wobei diese Varianz laufend über ein zurückliegendes Zeitintervall bestimmt wird und mit dem Erkennen des Überschreitens eines vorgegebenen Wertes der Varianz die sich ankündigende Störung erkannt ist.

5. Verfahren nach Anspruch 1, bei welchem
laufend oder zyklisch in ersten Zeitintervallen die Temperatur gemessen wird;
aus dem Temperaturverlauf ein vorgegebenes Frequenzband ausgefiltert wird, welches die Frequenzen des Temperaturverlaufs umfasst, der für die zu erkennende Störung charakteristisch ist;
die Kurve der quadratischen Werte der ausgefilterten Frequenzen der Temperaturänderungen quadriert und dann integriert und damit die Varianz der Temperaturänderungen im Frequenzband bestimmt wird;
wobei diese Varianz laufend über ein zurückliegendes Zeitintervall bestimmt wird und mit dem Erkennen des Überschreitens eines vorgegebenen Wertes der Varianz die sich ankündigende Störung erkannt ist.

6. Verfahren nach einem der Ansprüche 1 bis 5, bei welchem die Temperaturwerte der Zylinderwand im Bereich der oberen Umkehrpunkte des ersten und zweiten Kolbenringes gemessen werden.

7. Verfahren nach einem der Ansprüche 1 bis 6, bei welchem die Temperaturwerte der Zylinderwand an mehreren über den Umfang des Zylinders angeordneten Stellen gemessen werden.

8. Verfahren nach Anspruch 7 bei welchem die Temperatur-Messwerte jeder Mess-Stelle für sich, für das Erkennen einer Störung ausgewertet werden.

9. Verfahren nach Anspruch 8, bei welchem die Meldung der Störung nur erfolgt, wenn gleichzeitig mindestens aufgrund der Messwerte von zwei Stellen eine Störung erkannt wird.

10. Vorrichtung zum Durchführen des Verfahrens nach einem der Ansprüche 1 bis 9 mit mindestens einem Temperatursensor im oberen Bereich der Zylinderwand und Mitteln zum Erfassen und Bearbeiten der Messwerte und mit einem oder mehreren der nachfolgenden Mittel:
- Mittel zum Darstellen der Messwerte,
- Mittel zum selbsttätigen Erkennen von Störungen,
- Mittel zum Beeinflussen der Leistung eines oder mehrerer Zylinder,
- Mittel zum Beeinflussen der Schmiermittelzufuhr zu einem oder mehreren Zylindern,
- Mittel zum Auslösen eines Alarmsignals.

11. Dieselmotor mit einer Vorrichtung zum Erkennen von Störungen nach Anspruch 10, welche nach einem Verfahren nach einem der Ansprüche 1 bis 9 arbeitet.

12. Verwendung des Dieselmotors nach Anspruch 11 in einem Schiff.

## Claims

1. Method for the early recognition of piston and/or cylinder disorders, in particular, of scuffing and wear due to seizure of diesel engines, and, in particular in a large diesel engine which operate at low to medium speeds,
the continuous and/or cyclic measurement of the temperature of the cylinder wall at least one position in the upper region of the piston, by the recognition of the characteristic temperature variation for the disorder, and/or by the recognition of characteristic values which are derived from the characteristic temperature variation.
characterised by
the determination of the change in temperature over a time interval;
by the determination of changes in temperature, as well as, the recognition of the attainment of a predetermined positive temperature gradient in a first time interval;
by the determination of the change in temperature, as well as, by the recognition of the attainment of a predetermined positive temperature difference in a second time interval; and
by the determination of the frequency of the positive predetermined temperature gradient in connection with the predetermined positive temperature difference over the second time interval within a third time interval, whereby the disorder is recognised with the attainment or overshooting of a predetermined frequency in this third time interval.

2. Method according to claim 1, in which
the predetermined temperature gradient is at least 1°C per several seconds;
the temperature difference reaches several °C; and
the predetermined temperature gradient is observed within a given number of minutes in conjunction with the predetermined temperature differences, with a predetermined frequency which is characteristic for the engine and the sensor arrangement.

3. Method according to claim 2, in which
the temperature gradient is greater than or equal to 1°C per 20 seconds;
the temperature difference reached is greater than or equal to 4°C; and
this temperature gradient in conjunction with the temperature difference is viewed at least 4 times within 20 minutes.

4. Method according to claim 1, in which the temperature is measured continually or cyclically in first time intervals;
the variance of the temperature changes is preferably determined in a frequency band which includes frequencies of the temperature variation which is characteristic for the disorder to be recognised, whereby this variance is continually determined over a historic time interval and the disorder which is starting to manifest itself is recognised as such when it is recognised that the variance has exceeded a predetermined value.

5. Method according to claim 1, in which
the temperature is measured continually or cyclically in first time intervals;
from the temperature variation a predetermined frequency band is filtered out which includes the frequencies of the temperature variation, which is characteristic for the disorder to be recognised;
the curve of the square values of the filtered out frequencies of the changes in temperature, is squared and then integrated and thus the variance of the temperature changes in the frequency band is determined;
with this calculation of variance being continually determined over a historic time interval and with the disorder which is manifesting itself being recognised on recognising that a predetermined value of the variance has been exceeded.

6. Method according to one of claims 1 to 5, in which the temperature values of the cylinder wall are measured in the region of the upper points of reversal of the first and second piston rings.

7. Method according to one of claims 1 to 6, in which the measured temperature values of the cylinder wall are measured at a number of positions arranged around the periphery of the cylinder.

8. Method according to claim 7, in which the measured temperature values of each measurement position, are evaluated in their own right for the recognition of a disorder.

9. Method according to claim 8, in which the notification of a disorder only follows if at the same time, a disorder is recognised on the basis of the measurement values from at least two positions.

10. Apparatus for carrying out the method according to one of claims 1 to 9, having at least one temperature sensor in the upper region of the cylinder wall and means to detect and process the measurement values, with one or more of the foltowing means:
- means for the representation of the measurement values,
- means for the automatic recognition of disorders,
- means for influencing the power of one or more cylinders,
- the supply of lubricant to one or more cylinders,
- means to trigger an alarm signal.

11. Diesel engine having an apparatus for the recognition of disorders which works according to a method according to one of claims 1 to 9.

12. Use of the Diesel engine according to claim 11 in a ship.

## Revendications

1. Procédé pour détecter des détériorations de piston et/ou de cylindre, notamment d'une usure par frottement respectivement d'une usure par corrosion dans un grand moteur Diesel fonctionnant à des vitesses lentes et moyennes où la température de la paroi de cylindre, a au moins un emplacement dans la zone supérieure du piston, est mesurée d'une manière continue et/ou cyclique et où la détection de la détérioration a lieu par la reconnaissance de la courbe de température caractéristique pour la détérioration, respectivement par la reconnaissance de grandeurs caractéristiques obtenues à partir de la courbe de température caractéristique, caractérisé par la détermination de la modification de la température pendant un intervalle de temps ; la détermination de modifications de température ainsi que la reconnaissance de l'atteinte d'un gradient de température positif prédéterminé pendant un premier intervalle de temps ; par la détermination de la modification de la température ainsi que par la reconnaissance de l'atteinte d'une différence de température positive prédéterminée pendant un deuxième intervalle de temps ; et
par la détermination de la fréquence du gradient de température positif prédéterminé, en liaison avec la différence de température positive prédéterminée pendant le deuxième intervalle de temps lors d'un troisième intervalle de temps, où lors de l'atteinte ou du dépassement d'une fréquence prédéfinie dans ce troisième intervalle de temps, la détérioration est détectée.

2. Procédé selon la revendication 1, où le gradient de température prédéfini est au moins de 1°C par plusieurs secondes ;
la différence de température atteint plusieurs °C et le gradient de température prédéfini, en rapport avec la différence de température prédéfinie, est surveillé à l'intérieur d'un nombre de minutes données en une fréquence prédéfinie, caractéristique pour le moteur et l'agencement de capteur.

3. Procédé selon la revendication 2, où le gradient de température est supérieur ou identique à 1°C par 20 secondes ; la différence de température est plus grande ou identique à 4°C et ce gradient de température, en rapport avec la différence de température, dans un laps de temps de 20 minutes est observé , au moins 4 fois.

4. Procédé selon la revendication 1, où la température est mesurée d'une manière continue ou cyclique pendant le premier intervalle de temps ; la variance des modifications de température est déterminée de préférence dans une bande de fréquence qui comporte les fréquences de l'allure de température qui sont caractéristiques pour la détérioration à détecter, cette variance étant déterminée continuellement pendant un intervalle de temps écoulé, et lors de la reconnaissance du dépassement d'une valeur prédéterminée de la variance, la détérioration naissante est détectée.

5. Procédé selon la revendication 1, où la température est mesurée continuellement ou d'une manière cyclique dans un premier intervalle de temps ; où on filtre à partir de l'allure de température une bande de fréquence prédéterminée qui comporte les fréquences de l'allure de température qui est caractéristique pour la détérioration à détecter ;
la courbe des valeurs quadratiques des fréquences filtrées des modifications de température est cadrée et ensuite intégrée et ainsi la variance des modifications de température est déterminée dans la bande de fréquence ; où cette variance est déterminée d'une manière continue pendant un intervalle de temps écoulé et, lors de la reconnaissance du dépassement d'une valeur prédéterminée de la variance, la détérioration naissante est reconnue.

6. Procédé selon l'une des revendications 1 à 5, où les valeurs de température de la paroi de cylindre sont mesurées au voisinage du point d'inversion supérieur du premier et deuxième segment de piston.

7. Procédé selon l'une des revendications 1 à 6, où les valeurs de température de la paroi de cylindre sont mesurées à plusieurs emplacements disposés sur le pourtour du cylindre.

8. Procédé selon la revendication 7, où les valeurs de mesure de température de chaque emplacement de mesure sont évaluées individuellement, pour détecter une détérioration.

9. Procédé selon la revendication 8, où la détérioration est signalée seulement lorsqu'en même temps, au moins sur la base des valeurs de mesure de deux emplacements, une détérioration est reconnue.

10. Dispositif pour la mise en oeuvre du procédé selon l'une des revendications 1 à 9 avec au moins un capteur de température dans la zone supérieure de la paroi de cylindre et des moyens pour détecter et traiter les valeurs de mesure avec un ou plusieurs des moyens suivants :
- moyen pour représenter les valeurs de mesure,
- moyen pour la détection automatique de détériorations,
- moyen pour agir sur la puissance d'un ou de plusieurs cylindres,
- moyen pour agir sur l'amenée de lubrifiant vers un ou plusieurs cylindres,
- moyen pour déclencher un signal d'alarme.

11. Moteur Diesel comportant un dispositif pour détecter des détériorations selon la revendication 10 qui fonctionne selon un procédé selon l'une des revendications 1 à 9.

12. Utilisation du moteur Diesel selon la revendication 11 dans un navire.
